# EUROPEAN PATENT APPLICATION

(11) **EP 4 525 162 A1**
(43) Date of publication of application: **19.03.2025**
(21) Application number: 24188052.5
(22) Date of filing: 11.07.2024
(51) Int. Cl.: H01M 50/291, H01M 50/209, H01M 50/262, H01M 50/264

(54) **BATTERY PACK AND MANUFACTURING METHOD THEREOF**

(30) Priority: 15.09.2023 US 202363583178 P
(71) Applicant: Samsung SDI Co., Ltd, Gyeonggi-do 17084 (KR)
(72) Inventor: Kim, Sang Myeong, Suwon-si, Gyeonggi-do 16678 (KR); Moon, Dae Yon, Suwon-si, Gyeonggi-do 16678 (KR); Ahn, Byung Kook, Suwon-si, Gyeonggi-do 16678 (KR); Lee, Kil Seok, Suwon-si, Gyeonggi-do 16678 (KR); Kang, Woong Jip, Suwon-si, Gyeonggi-do 16678 (KR)
(74) Representative: Gulde & Partner

(57) **Abstract**

A battery pack and a manufacturing method thereof are disclosed. A battery pack includes a housing (100), a cell stack (200) inside the housing and including a plurality of battery cells arranged along a first direction, and an end plate (300) between the housing and the cell stack, and the end plate includes a first plate (310) configured to contact the housing, a second plate (320) arranged to face the first plate and configured to contact or separate from the cell stack while being moved in a direction parallel to the first direction, a chamber (330) between the first plate and the second plate, and a spacer (340) located inside the chamber such that the second plate contacts the cell stack.

## Description

### BACKGROUND

### 1. Field of the Invention

Aspects of embodiments of the present disclosure relate to a battery pack and a manufacturing method thereof.

### 2. Discussion of Related Art

Secondary batteries are batteries that are able to be charged and discharged, unlike primary batteries that are not able to be recharged. Low-capacity secondary batteries may be used in small portable electronic devices, such as smartphones, feature phones, laptop computers, digital cameras, and camcorders, and high-capacity secondary batteries are widely used as power sources for driving motors of hybrid vehicles, electric vehicles, or the like, and as batteries for power storage. The secondary battery includes an electrode assembly having a positive electrode and a negative electrode, a case accommodating the positive electrode and the negative electrode, an electrode terminal connected to the electrode assembly, and the like.

The secondary battery may be used in a battery pack formed of a plurality of unit battery cells connected in series and/or parallel to provide high energy density. The battery pack may be formed by connecting electrode terminals of a plurality of unit batteries to each other to meet a required amount of power and, for example, to implement a high-power secondary battery for an electric vehicle.

The above-described information disclosed in the technology that forms the background of the present disclosure is provided to improve understanding of the background of the present disclosure, and thus may include information that does not constitute the related art.

### SUMMARY

According to an aspect of embodiments of the present disclosure, a battery pack capable of allowing smooth or easy assembly and improving the lifespan of battery cells, and a manufacturing method thereof, are provided.

These and other aspects and features of the present disclosure will be described in or will be apparent from the following description of some embodiments of the present disclosure.

According to one or more embodiments, a battery pack includes a housing, a cell stack inside the housing and including a plurality of battery cells arranged along a first direction, and an end plate between the housing and the cell stack, and the end plate includes a first plate configured to contact the housing, a second plate arranged to face the first plate and configured to contact or separate from (preferably contact) the cell stack while being moved in a direction parallel to the first direction, a chamber between the first plate and the second plate, and a spacer located inside the chamber such that the second plate contacts the cell stack.

The spacer may be elastically deformable.

The spacer may be hardened after being injected into the chamber in a liquid state.

The end plate may further include a first sealing member between the first plate and the second plate and configured to seal the chamber. Preferably, the end plate may further include a first sealing member disposed between the first plate and the second plate and configured to at least partially seal the chamber against the first plate and the second plate.

The first sealing member may include a first sealing body that is arranged to (e.g. at least partially) surround the chamber and includes ends in close (direct) contact with the first plate and the second plate, respectively, and a support member fixed to at least one of the first plate and the second plate and configured to support the first sealing body.

The first sealing body may expand and contract in a direction parallel to the first direction in conjunction with a relative movement of the first plate and the second plate.

The first sealing body may be elastically deformable.

A side of the chamber may pass through the first sealing body and connect with an external space of the first plate and the second plate.

The first sealing member may further include a plurality of sealing ribs protruding from an end of the first sealing body.

The end plate may further include a jig hole formed through the first plate and a second sealing member spaced apart from the first sealing member and configured to seal the jig hole.

The second sealing member may include a second sealing body that is arranged to face the jig hole and includes ends in close (direct) contact with the first plate and the second plate, respectively, and a guide hole passing through the second sealing body and configured to connect with the jig hole.

An area of the guide hole may be larger than an area of the jig hole.

The battery pack may further comprise at least one reinforcing member between the first plate and the second plate and coupled to the spacer. Preferably, the at least one reinforcing member protrudes toward the spacer from at least one of the first plate and the second plate.

The battery pack may further include a reinforcing member between the first plate and the second plate and coupled to the spacer. The battery pack may further include a plurality of reinforcing members between the first plate and the second plate and coupled to the spacer.

The battery pack may further include a plurality of reinforcing members protruding toward the spacer from at least one of the first plate and the second plate.

A reinforcing member of the plurality of reinforcing members may include a first reinforcing rod and a second reinforcing rod connected to the first reinforcing rod, and a cross-sectional area of the second reinforcing rod may be larger than a cross-sectional area of the first reinforcing rod.

According to one or more embodiments, a manufacturing method of a battery pack includes forming a cell stack by arranging a plurality of battery cells in a first direction, aligning a first plate and a second plate with respect to the cell stack, bringing the second plate into contact with the cell stack, installing a spacer in a chamber between the first plate and the second plate, and assembling the cell stack together with the first plate, the second plate, and the spacer in a housing.

The aligning the first plate and the second plate with respect to the cell stack may include fixing the first plate at a reference position and arranging the cell stack and the second plate to face each other in the first direction.

The bringing the second plate into contact with the cell stack may include inserting a pressurizing jig into a jig hole formed in the first plate and moving the pressurizing jig and pressurizing the second plate toward the cell stack.

In the installing the spacer between the first plate and the second plate, the spacer may be hardened after being injected in a liquid state between the first plate and the second plate. In other words, the installing of the spacer between the first plate and the second plate may comprise injecting a curable liquid precursor of the spacer between the first plate and the second plate, and then harden (cure) said precursor to form the spacer. The curable liquid precursor may be for example a curable synthetic resin material.

In the assembling the cell stack together with the first plate, the second plate, and the spacer in the housing, the first plate may be in contact with the housing.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure is not to be construed as being limited to the drawings.
FIG. 1 is a perspective view schematically illustrating a configuration of a battery pack according to an embodiment of the present disclosure;
FIG. 2 is an enlarged view schematically illustrating the configuration of the battery pack according to an embodiment of the present disclosure;
FIG. 3 is a cross-sectional view schematically illustrating the configuration of the battery pack according to an embodiment of the present disclosure;
FIG. 4 is a perspective view schematically illustrating a configuration of a battery cell according to an embodiment of the present disclosure;
FIG. 5 is a cross-sectional view schematically illustrating the configuration of the battery cell according to an embodiment of the present disclosure;
FIG. 6 is a perspective view schematically illustrating a configuration of an end plate according to an embodiment of the present disclosure;
FIGS. 7 and 8 are cross-sectional views schematically illustrating the configuration of the end plate according to an embodiment of the present disclosure;
FIG. 9 is an exploded perspective view schematically illustrating the configuration of the end plate according to an embodiment of the present disclosure;
FIG. 10 is a perspective view schematically illustrating a configuration of a first sealing member according to an embodiment of the present disclosure;
FIG. 11 is a cross-sectional view schematically illustrating the configuration of the first sealing member according to an embodiment of the present disclosure;
FIGS. 12 and 13 are views illustrating some examples of a support member illustrated in FIG. 10;
FIG. 14 is a view schematically illustrating a configuration of a reinforcing member according to an embodiment of the present disclosure;
FIG. 15 is a flowchart schematically showing a sequence of a manufacturing method of a battery pack according to an embodiment of the present disclosure;
FIG. 16 is a flowchart schematically showing a sequence of an operation of a manufacturing method of a battery pack according to an embodiment of the present disclosure;
FIG. 17 is a view schematically illustrating a process of an operation of a manufacturing method of a battery pack according to an embodiment of the present disclosure;
FIG. 18 is a flowchart schematically showing a sequence of an operation of a manufacturing method of a battery pack according to an embodiment of the present disclosure;
FIGS. 19 and 20 are views schematically illustrating a process of an operation of a manufacturing method of a battery pack according to an embodiment of the present disclosure;
FIGS. 21 and 22 are views illustrating movement states of a second plate according to a length deviation of a cell stack;
FIGS. 23 and 24 are views schematically illustrating a process of an operation of a manufacturing method of a battery pack according to an embodiment of the present disclosure; and
FIG. 25 is a view schematically illustrating a process of an operation of a manufacturing method of a battery pack according to an embodiment of the present disclosure.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

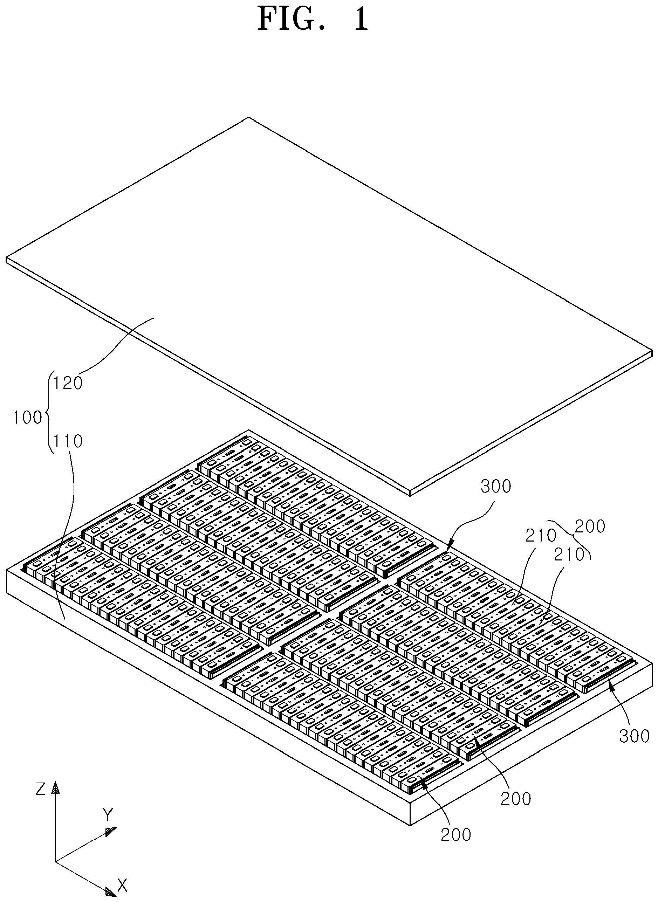

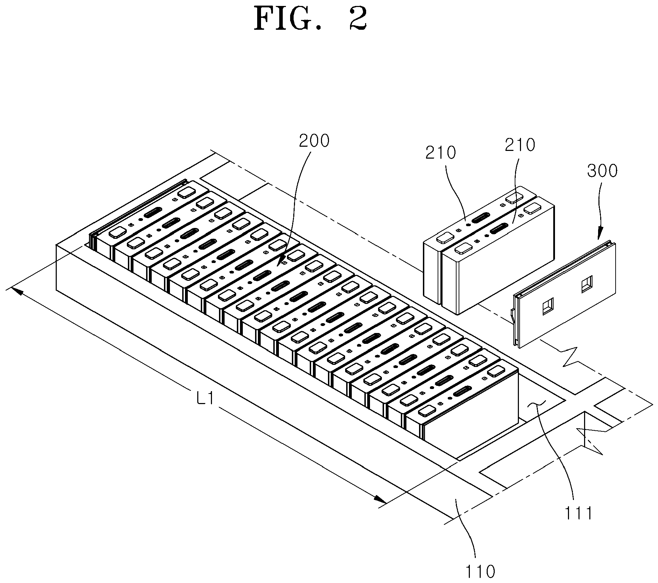

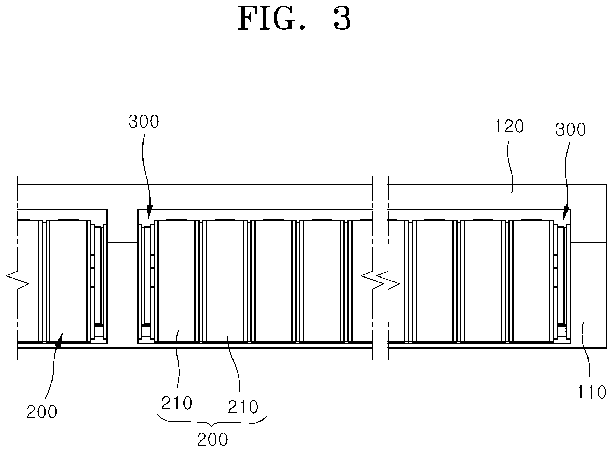

FIG. 1 is a perspective view schematically illustrating a configuration of a battery pack according to an embodiment of the present disclosure; FIG. 2 is an enlarged view schematically illustrating the configuration of the battery pack according to an embodiment of the present disclosure; and FIG. 3 is a cross-sectional view schematically illustrating the configuration of the battery pack according to an embodiment of the present disclosure.

Referring to FIGS. 1 to 3, a battery pack according to the present embodiment includes a housing 100, a cell stack 200, and an end plate 300.

The housing 100 forms a schematic exterior of the battery pack and may function as a structure for supporting the cell stack 200 and the end plate 300 as a whole.

The housing 100 may include a housing body 110 and a cover 120.

In an embodiment, the housing body 110 may be formed to have approximately a shape of a box. However, a cross-sectional shape of the housing body 110 is not limited to a square shape as illustrated in FIG. 1, and the design thereof may be changed to any of various shapes, such as a polygonal, circular, or oval shape.

An accommodating space 111 in which the cell stack 200 is accommodated may be formed inside the housing body 110. The accommodating space 111 may be concavely recessed inside the housing body 110 and may be formed to have a shape of a groove with an open upper side. In an embodiment, the accommodating space 111 may have a rectangular cross-sectional shape. The accommodating space 111 may have a length (e.g., a predetermined length) L1 in a direction parallel to a first direction and a width (e.g., a predetermined width) in a direction parallel to a second direction intersecting the first direction. Here, the first direction and the second direction may refer to directions parallel to X-axis and Y-axis directions, respectively, based on FIG. 1.

In an embodiment, a plurality of accommodating spaces 111 may be provided. The plurality of accommodating spaces 111 may be partitioned off from each other by partition walls or the like. The plurality of accommodating spaces 111 may be arranged in one or more rows along the first and second directions. As an example, the plurality of accommodating spaces 111 may be arranged in two rows along the first direction and in four rows along the second direction. In another embodiment, the accommodating space 111 may also be formed as a single unit.

The cover 120 may be coupled to the housing body 110 and may close an internal space of the housing body 110, that is, the accommodating space 111. As an example, the cover 120 may be formed to have a substantially plate shape and may be disposed to face an upper surface of the housing body 110. The cover 120 may be fixed to the housing body 110 by any of various types of coupling methods, such as bolting, welding, insertion coupling, or the like.

The cell stack 200 may be disposed inside the housing 100 and, more specifically, in the accommodating space 111. A number of cell stacks 200 may be equal to the number of accommodating spaces 111. When a plurality of accommodating spaces 111 is formed, a plurality of cell stacks 200 may be provided, and each of the cell stacks 200 may be individually accommodated inside a respective accommodating space 111.

The cell stack 200 may include a plurality of battery cells 210. In an embodiment, a number of battery cells 210 included in each cell stack 200 may be the same.

The battery cell 210 may function as a unit structure for storing and supplying power in the battery pack.

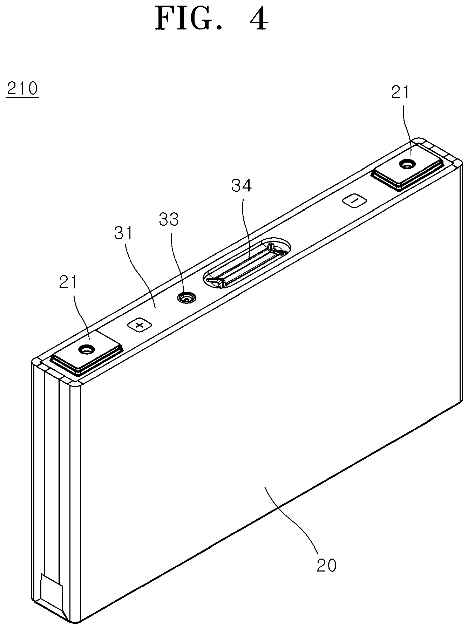

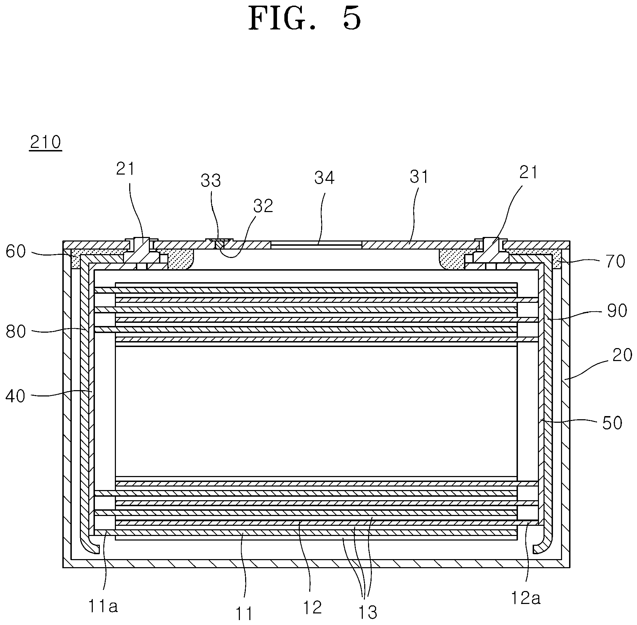

FIG. 4 is a perspective view schematically illustrating a configuration of the battery cell according to an embodiment of the present disclosure; and FIG. 5 is a cross-sectional view schematically illustrating the configuration of the battery cell according to an embodiment of the present disclosure.

Referring to FIGS. 4 and 5, the battery cell 210 may include at least one electrode assembly formed by winding a positive electrode 11 and a negative electrode 12 with a separator 13, which is an insulator, interposed therebetween, a case 20 in which the electrode assembly is installed, and a cap assembly coupled to an opening of the case 20.

In an embodiment, the battery cell 210 is a lithium ion secondary battery and is described as an example as having a prismatic shape. However, the present disclosure is not limited thereto, and the battery cell 210 may be a lithium polymer battery or a cylindrical battery, for example.

The positive electrode 11 and the negative electrode 12 may include a coated portion that is a region in which a current collector formed of a thin metal foil is coated with an active material, and uncoated portions 11a and 12a that are regions that are not coated with the active material.

In an embodiment, the positive electrode 11 and the negative electrode 12 may be wound after interposing the separator 13, which is an insulator, therebetween. However, the present disclosure is not limited thereto, and, in an embodiment, the electrode assembly may have a structure in which positive electrodes and negative electrodes composed of a plurality of sheets are alternately stacked with a separator interposed therebetween.

The case 20 may form an overall exterior of the battery cell 210, and may be made of a conductive metal such as aluminum, an aluminum alloy, or nickel-plated steel. In addition, the case 20 may provide a space in which the electrode assembly is accommodated.

The cap assembly may include a cap plate 31 that covers the opening of the case 20, and the case 20 and the cap plate 31 may be made of a conductive material. In an embodiment, a terminal 21 electrically connected to the positive electrode 11 or the negative electrode 12 may be installed to protrude outward through the cap plate 31.

In addition, a pair of terminals 21 protruding outward through the cap plate 31 may be formed. The pair of terminals 21 may be connected to the positive electrode 11 and the negative electrode 12, respectively, and may function as a positive electrode terminal and a negative electrode terminal of the battery cell 210. The terminals 21 may be electrically connected to current collectors including first and second current collectors 40 and 50 (herein referred to as "positive and negative current collectors") that are bonded by welding to a positive uncoated region 11a or a negative uncoated region 12a. In an embodiment, for example, the positive and negative electrode terminals 21 may be bonded to the positive and negative current collectors 40 and 50 by welding. However, the present disclosure is not limited thereto, and, in an embodiment, the positive and negative electrode terminals 21 and 22 and the positive and negative current collectors 40 and 50 may be formed by being integrally combined. In an embodiment, an outer peripheral surface of an upper pillar of the terminal 21 may be threaded and fixed to the cap plate 31 with a nut.

However, the present disclosure is not limited thereto, and, in an embodiment, the terminals 21 may have a rivet structure so as to be riveted, or may be welded to the cap plate 31.

In addition, the cap plate 31 may be made of a thin plate and coupled to the opening of the case 20, and, in the cap plate 31, an electrolyte inlet 32 where a sealing stopper 33 is to be installed may be formed, and a vent 34 in which a notch is formed may be installed.

The vent 34 may be opened and closed in conjunction with changes in an internal pressure of the case 20. That is, the vent 34 may remain in a closed state and seal the case 20 during normal operation of the electrode assembly. The vent 34 may open as the internal pressure of the case 20 rises above a certain level (e.g., a set level) due to overcharging or a fire, and discharge emissions, such as a flame and gas, from the inside of the case 20 to the outside of the case 20.

In an embodiment, an insulating member may be installed between the electrode assembly and the cap plate 31. In an embodiment, the insulating member may include first and second lower insulating members 60 and 70, and each of the first and second lower insulating members 60 and 70 may be installed between the electrode assembly and the cap plate 31.

In addition, according to an embodiment, an end of a separating member that is capable of being installed to face a side surface of the electrode assembly may be installed between the insulating member and the terminals 21.

In an embodiment, the separating member may include a first separating member 80 and a second separating member 90.

Therefore, respective first ends of the first and second separating members 80 and 90 that are capable of being installed to face side surfaces of the electrode assembly may be installed between the first lower insulating member 60 and the positive electrode terminal 21 and between the second lower insulating member 70 and the negative electrode terminal 22.

As a result, the terminals 21 coupled by welding to the positive and negative current collectors 40 and 50 may be coupled to an end of each of the first and second lower insulating members 60 and 70 and an end of each of the first and second separating members 80 and 90.

The plurality of battery cells 210 may be arranged along the first direction inside the accommodating space 111. In an embodiment, an insulating sheet (not illustrated) for insulation and heat insulation may be disposed between neighboring battery cells 210. In an embodiment, a length of the cell stack 200 parallel to the first direction may be equal to a sum of thicknesses of the battery cells 210 and the insulating sheets parallel to the first direction. The length of the cell stack 200 parallel to the first direction may be shorter than the length of the accommodating space 111 parallel to the first direction. Accordingly, the cell stack 200 may provide a space where the end plate 300 is allowed to be installed, which will be described below, inside the accommodating space 111.

An actual length of the cell stack 200 may have a value different from a design length due to a thickness deviation of the battery cells 210, or the like. For example, when the thickness of the battery cells 210 included in the cell stack 200 is greater than a design value, the actual length of the cell stack 200 may be greater than the design length. In addition, when the thickness of the battery cells 210 included in the cell stack 200 is smaller than the design value, the actual length of the cell stack 200 may be smaller than the design length.

Accordingly, at least one pair of cell stacks 200 among the plurality of cell stacks 200 may be formed to have different lengths due to a thickness deviation of the battery cells 210, or the like. That is, even when each cell stack 200 has a same number of battery cells 210, the lengths of any pair of cell stacks 200 may have different values.

The end plate 300 may be disposed between the housing 100 and the cell stack 200. That is, the end plate 300 may be installed in an entire area of the accommodating space 111 excluding an area where the cell stack 200 is disposed. Both, or opposite, sides of the end plate 300 may be in close contact with an inner wall surface of the housing body 110 surrounding the accommodating space 111 and the cell stack 200, respectively. Accordingly, the end plate 300 may prevent or substantially prevent the cell stack 200 from flowing or separating inside the accommodating space 111.

During a process of manufacturing a battery pack, the end plate 300 may absorb a length error of the cell stack 200 that occurs due to accumulation of thickness deviations of the battery cells 210. That is, the end plate 300 may function as a component for maintaining the sum of the length of the cell stack 200 parallel to the first direction and the thickness of the end plate 300 to be equal to the length L1 of the accommodating space 111 parallel to the first direction by a shape deformation thereof during a process of manufacturing a battery pack. For example, when the actual length of the cell stack 200 is greater than the design length, the thickness of the end plate 300 may be smaller than a reference value, and when the actual length of the cell stack 200 is smaller than the design length, the thickness of the end plate 300 may be greater than the reference value. Here, the reference value for the thickness of the end plate 300 may refer to a thickness at which both, or opposite, sides of the end plate 300 are in close contact with the inner wall surface of the housing body 110 and the cell stack 200, respectively, when the actual length of the cell stack 200 is equal to the design length.

A plurality of end plates 300 may be provided. A plurality of end plates 300 may be individually installed for each cell stack 200. When a pair of cell stacks 200 have different lengths, each of the end plates 300 in contact with the pair of cell stacks 200 may have a different thickness. Accordingly, the sum of the length of each cell stack 200 installed inside different accommodating spaces 111 and the thickness of the end plate 300 may all be the same.

Accordingly, the end plate 300 may prevent or substantially prevent a phenomenon that the cell stack 200 is not smoothly or easily inserted into the accommodating space 111, or the cell stack 200 is not firmly fixed inside the accommodating space 111. In addition, the end plate 300 may improve a lifespan of the battery pack by preventing or substantially preventing pressure differences from occurring between the cell stacks 200 when a plurality of cell stacks 200 are formed.

A pair of end plates 300 may be installed in each accommodating space 111. The pair of end plates 300 installed in each accommodating space 111 may be disposed to be spaced apart from each other in a direction parallel to the first direction with the cell stack 200 interposed therebetween. The pair of end plates 300 installed in each accommodating space 111 may be disposed to individually face a pair of battery cells 210 disposed at both, or opposite, ends of the cell stack 200, respectively.

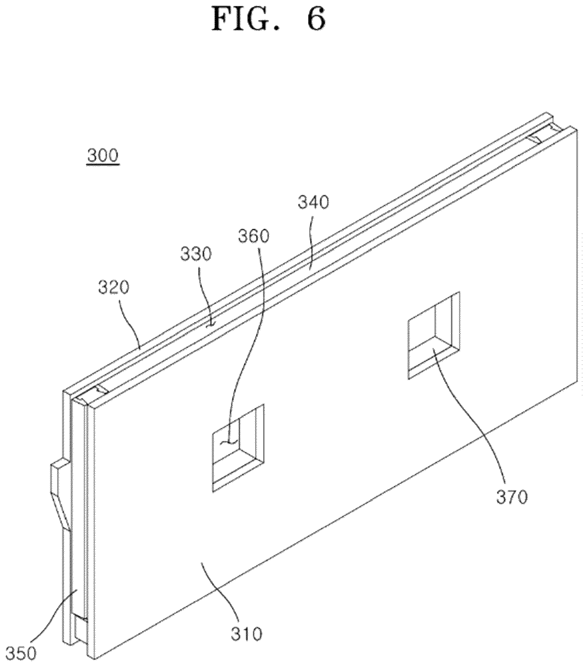

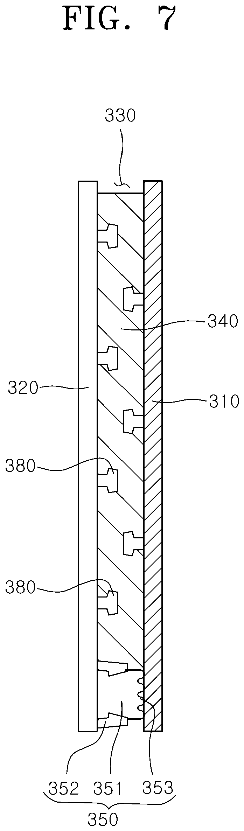

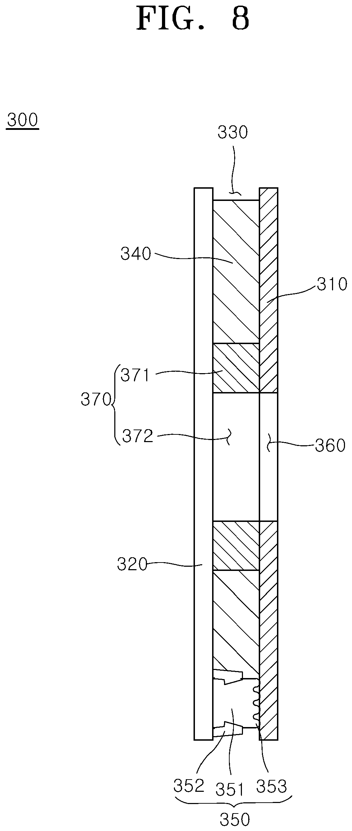

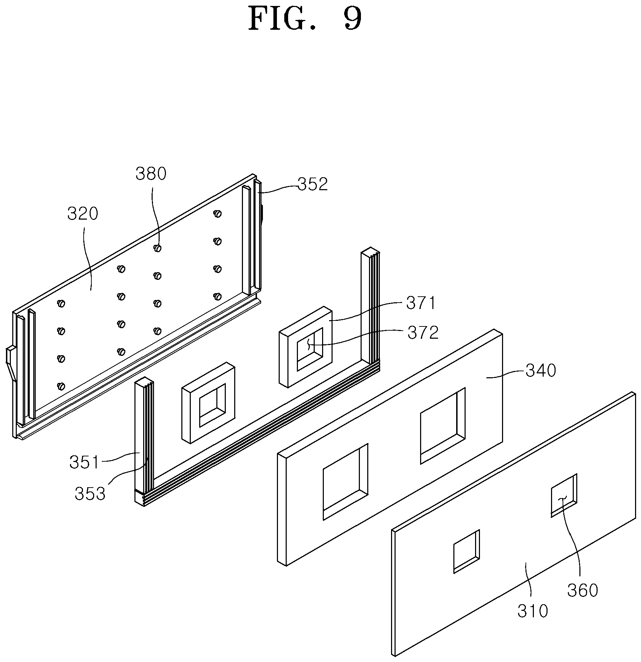

FIG. 6 is a perspective view schematically illustrating a configuration of the end plate according to an embodiment of the present disclosure; FIGS. 7 and 8 are cross-sectional views schematically illustrating the configuration of the end plate according to an embodiment of the present disclosure; and FIG. 9 is an exploded perspective view schematically illustrating the configuration of the end plate according to an embodiment of the present disclosure.

Referring to FIGS. 1 to 9, the end plate 300 may include a first plate 310, a second plate 320, a chamber 330, and a spacer 340.

The first plate 310 may form an exterior of a side of the end plate 300, and may be in contact with the housing 100. The first plate 310 may be formed to have a substantially flat plate shape. The first plate 310 may be disposed inside the accommodating space 111 such that both, or opposite, surfaces thereof face the inner wall surface of the housing body 110 and the end of the cell stack 200, respectively. The first plate 310 may be disposed parallel to the battery cell 210 disposed at the end of the cell stack 200 and perpendicular to the first direction.

The inner surface of the first plate 310 may be spaced apart from the battery cell 210 disposed at the end of the cell stack 200 by a distance (e.g., a predetermined distance) along the first direction. In an embodiment, the outer surface of the first plate 310 may surround the accommodating space 111 and may be in contact with the inner wall surface of the housing body 110 perpendicular to the first direction. In an embodiment, a distance between the outer surfaces of the pair of first plates 310 provided on each of the pair of end plates 300 installed in the accommodating space 111 may be equal to the length L1 of the accommodating space 111 parallel to the first direction.

An area of the first plate 310 may be smaller than an area of the battery cell 210 perpendicular to the first direction. As an example, a ratio of the area of the first plate 310 to the area of the battery cell 210 perpendicular to the first direction may be 80%.

The second plate 320 may form the exterior of another side of the end plate 300, and may be disposed to face the first plate 310. The second plate 320 may be formed to have a substantially flat plate shape. The second plate 320 may be disposed inside the accommodating space 111 and, more specifically, between the inner surface of the first plate 310 and the end of the cell stack 200. The second plate 320 may be disposed parallel to the first plate 310 and perpendicular to the first direction.

The inner surface of the second plate 320 may be disposed to face the battery cell 210 disposed at the end of the cell stack 200. The outer surface of the second plate 320 may be disposed to face the inner surface of the first plate 310 at a distance (e.g., a predetermined distance) apart therefrom.

An area of the second plate 320 may be smaller than the area of the battery cell 210 perpendicular to the first direction. As an example, a ratio of the area of the second plate 320 to the area of the battery cell 210 perpendicular to the first direction may be 80%.

The second plate 320 may be moved in the direction parallel to the first direction before the spacer 340, which will be described below, is installed. The inner surface of the second plate 320 may be in contact with or separated from the end of the cell stack 200 and, more specifically, the battery cell 210 disposed at the end of the cell stack 200, depending on a direction of movement.

The chamber 330 may be disposed between the first plate 310 and the second plate 320. The chamber 330 may refer to an empty space formed between the inner surface of the first plate 310 and the outer surface of the second plate 320 as the first plate 310 and the second plate 320 are spaced apart in the first direction. The thickness of the chamber 330 parallel to the first direction may be changed by movement of the second plate 320 with respect to the first plate 310.

The spacer 340 may be disposed inside the chamber 330 such that the second plate 320 is in contact with the cell stack 200. That is, the spacer 340 may function as a component for fixing the thickness of the chamber 330 and restricting (buffering) movement of the second plate 320 in a direction away from the cell stack 200 after the second plate 320 is in contact with the cell stack 200. Accordingly, the spacer 340 may maintain the first plate 310 and the second plate 320 in a state of being in firm contact with the housing 100 and the cell stack 200, respectively.

Both, or opposite, surfaces of the spacer 340 may be fixed to the inner surface of the first plate 310 and the outer surface of the second plate 320, respectively. In an embodiment, the spacer 340 may be provided to be elastically deformable. For example, the spacer 340 may comprise or consist of an elastomer, preferably provided by resin casting. Resin casting includes for instance injecting a curable synthetic resin material into a chamber 330 and subsequent curing (harden) of the resin to form a polymer (e.g. an elastomer). For example, the spacer 340 may be made of a (curable) synthetic resin material, such as an epoxy resin, or a polyurethane resin, or the like. Said synthetic resin material may be curable to form an elastomer. Preferably, the spacer 340 may comprise or consist of an elastic polyurethane or an elastic epoxy-based polymer. Accordingly, the spacer 340 may absorb an expansion displacement of the battery cell 210 through elastic deformation thereof when the battery cell 210 expands due to overcharging, or the like.

In an embodiment, the spacer 340 may be hardened after being injected in a liquid state between the first plate 310 and the second plate 320, that is, in the chamber 330 in a state where the second plate 320 is in contact with the cell stack 200. In another embodiment, the spacer 340 may be inserted into the chamber 330 after being hardened into a solid state.

The end plate 300 may further include a first sealing member 350.

The first sealing member 350 may be disposed between the first plate 310 and the second plate 320, and may seal the chamber 330. The first sealing member 350 may function as a component for movably supporting the second plate 320 with respect to the first plate 310 and preventing or substantially preventing the spacer 340 from leaking out of the chamber 330 during a process of injecting the spacer 340 into the chamber 330.

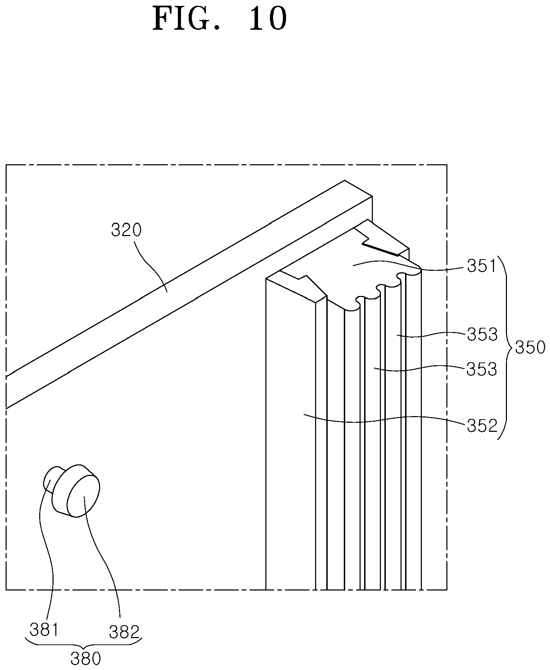

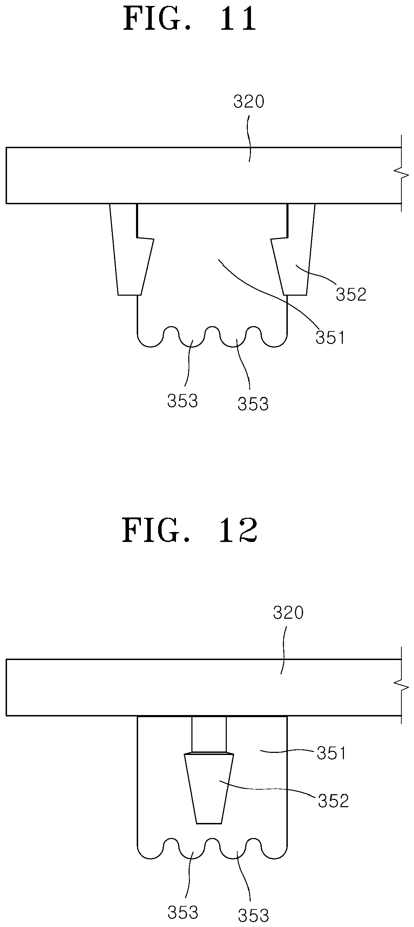

FIG. 10 is a perspective view schematically illustrating a configuration of the first sealing member according to an embodiment of the present disclosure; and FIG. 11 is a cross-sectional view schematically illustrating the configuration of the first sealing member according to an embodiment of the present disclosure.

Referring to FIGS. 6 to 11, the first sealing member 350 may include a first sealing body 351 and a support member 352.

The first sealing body 351 may be disposed to surround the chamber 330 between the first plate 310 and the second plate 320. As an example, the first sealing body 351 may be formed to have a strip shape extending along an edge area of the chamber 330. The first sealing body 351 may be disposed to surround a portion of the edge area of the chamber 330, and a side of the chamber 330 may connect with an external space of the first plate 310 and the second plate 320 through the first sealing body 351.

In an embodiment, the first sealing body 351 may be disposed to surround both, or opposite, side surfaces and, in an embodiment, the lower surface of the chamber 330, as illustrated in FIG. 6, and may open an upper surface of the chamber 330. Accordingly, the first sealing body 351 may provide a path through which the spacer 340 is injected on the upper side of the chamber 330.

In an embodiment, both, or opposite, ends of the first sealing body 351 may be in close contact with the inner surface of the first plate 310 and the outer surface of the second plate 320, respectively. Accordingly, the first sealing body 351 may prevent or substantially prevent the spacer 340 injected into the chamber 330 from leaking out.

In an embodiment, the first sealing body 351 may be formed of an elastically deformable material, such as rubber, silicone, or the like. Accordingly, the first sealing body 351 may be brought into close contact with the first plate 310 and the second plate 320 by an elastic restoring force thereof.

A sealing rib 353 may be formed at an end of the first sealing body 351. The sealing rib 353 may protrude from the end of the first sealing body 351 in the direction parallel to the first direction. The sealing rib 353 may be disposed such that a longitudinal direction thereof is parallel to a direction in which the first sealing body 351 extends. In an embodiment, the sealing rib 353 may be formed of a same material as the first sealing body 351.

In FIGS. 10 and 11, the sealing rib 353 is illustrated as being formed only on one end of the first sealing body 351 facing the first plate 310 by way of example, but the sealing rib 353 is not limited thereto, and may be formed only at the other end of the first sealing body 351 facing the second plate 320, or may be formed at both ends of the first sealing body 351.

In an embodiment, the sealing rib 353 may be formed to become narrower toward an end thereof. As an example, the sealing rib 353 may be formed to have a cross-sectional shape of generally a semicircle. Accordingly, the sealing rib 353 may increase an amount of pressure transmitted from the first plate 310 or the second plate 320 per unit area such that the first sealing body 351 is brought into close contact with the first plate 310 or the second plate 320.

In an embodiment, a plurality of sealing ribs 353 may be formed. The plurality of sealing ribs 353 may be disposed to be spaced apart from each other on a surface of the end of the first sealing body 351. As an example, the plurality of sealing ribs 353 may be arranged along a direction intersecting the direction in which the first sealing body 351 extends. Accordingly, the plurality of sealing ribs 353 may block a path through which the spacer 340 injected in a liquid state leaks out in multiple stages.

In an embodiment, both, or opposite, ends of the first sealing body 351 may be integrally fixed to the inner surface of the first plate 310 and the outer surface of the second plate 320, respectively. In an embodiment, both, or opposite, ends of the first sealing body 351 may be directly fixed to the inner surface of the first plate 310 and the outer surface of the second plate 320 by any of an adhesive, insertion coupling, or the like, or may be indirectly fixed by the support member 352 or the like, which will be described below. The first sealing body 351 may expand and contract in the direction parallel to the first direction by an elastic restoring force thereof when the second plate 320 relatively moves with respect to the first plate 310. Accordingly, the first sealing body 351 may maintain close contact with the first plate 310 and the second plate 320, and, at the same time, allow the second plate 320 to move.

The support member 352 may support the first sealing body 351 between the first plate 310 and the second plate 320. That is, the support member 352 may function as a component for preventing or substantially preventing the first sealing body 351 from being separated from a position (e.g., a set position) between the first plate 310 and the second plate 320. The support member 352 may be fixed to at least one of the first plate 310 and the second plate 320.

Herein, the support member 352 will be described as being fixed to the second plate 320 as illustrated in FIGS. 10 and 11 by way of example. However, the support member 352 is not limited thereto, and may be fixed to the first plate 310 or both the first plate 310 and the second plate 320.

As an example, the support member 352 may be formed to have a shape of a rod protruding from the second plate 320 toward the chamber 330. The support member 352 may be disposed such that a surface thereof faces a side surface of the first sealing body 351. In an embodiment, the surface of the support member 352 disposed to face the side surface of the first sealing body 351 may be formed to have a hook shape. In an embodiment, the surface of the support member 352 disposed to face the side surface of the first sealing body 351 may be hook-coupled to the side surface of the first sealing body 351. In an embodiment, a pair of support members 352 may be formed. The pair of support members 352 may be disposed to face both, or opposite, side surfaces of the first sealing body 351, respectively, and may be hook-coupled to both side surfaces of the first sealing body 351, respectively. In this case, an end of the first sealing body 351 facing the first plate 310 may be fixed to the inner surface of the first plate 310 using an adhesive or the like.

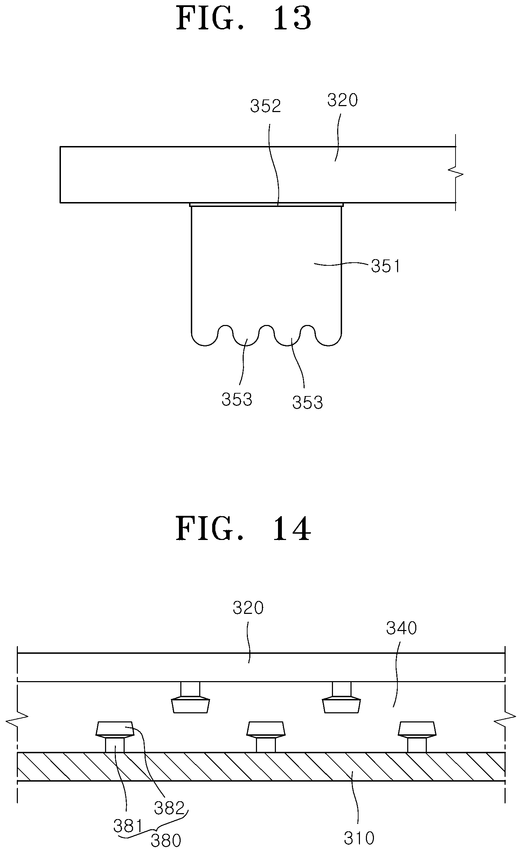

FIGS. 12 and 13 are views illustrating some examples of the support member illustrated in FIG. 10.

Referring to FIG. 12, in an embodiment, the support member 352 may be formed to have a shape of a rod protruding from the second plate 320 toward the chamber 330. The support member 352 may be inserted into the first sealing body 351. The support member 352 may have a step structure at a center such that the support member 352 is engaged with the inside of the first sealing body 351. An end of the first sealing body 351 facing the first plate 310 may be fixed to the inner surface of the first plate 310 using an adhesive or the like.

Referring to FIG. 13, in an embodiment, the support member 352 may be formed to have a shape of a sheet with an adhesive material applied to both surfaces thereof. The support member 352 may be disposed between the second plate 320 and the end of the first sealing body 351, and both, or opposite, surfaces thereof may be attached to the second plate 320 and the surface of the end of the first sealing body 351, respectively. An end of the first sealing body 351 facing the first plate 310 may be fixed to the inner surface of the first plate 310 using an adhesive or the like.

The end plate 300 may further include a jig hole 360 and a second sealing member 370.

The jig hole 360 may be formed through the first plate 310. The jig hole 360 may function as a component for providing a path through which the pressurizing jig for relatively moving the second plate 320 with respect to the first plate 310 is inserted into the chamber 330 during a process of manufacturing a battery pack. The jig hole 360 may pass through the outer and inner surfaces of the first plate 310 in a direction parallel to the first direction. Both, or opposite, surfaces of the jig hole 360 may connect with the external space of the first plate 310 and the chamber 330, respectively. However, a cross-sectional shape of the jig hole 360 may have any of various shapes other than the square illustrated in FIG. 9, such as a circular, oval, or polygonal shape.

In an embodiment, a plurality of jig holes 360 may be provided. The plurality of jig holes 360 may be disposed to be spaced apart from each other on the first plate 310. As an example, a pair of jig holes 360 may be formed, and the pair of jig holes 360 may be spaced apart from each other along the second direction intersecting the first direction.

The second sealing member 370 may be spaced apart from the first sealing member 350 and may seal the jig hole 360. That is, the second sealing member 370 may function as a component for preventing or substantially preventing the spacer 340 from leaking out of the chamber 330 through the jig hole 360 during the process of injecting the spacer 340 into the chamber 330.

The second sealing member 370 may include a second sealing body 371 and a guide hole 372.

The second sealing body 371 may be disposed to face the jig hole 360 inside the chamber 330. A cross-sectional area of the second sealing body 371 may be formed to be larger than a cross-sectional area of the jig hole 360. Both, or opposite, ends of the second sealing body 371 may be in close contact with the inner surface of the first plate 310 and the outer surface of the second plate 320, respectively. Both, or opposite, ends of the second sealing body 371 may be fixed to the inner surface of the first plate 310 and the outer surface of the second plate 320 by any of various coupling methods, such as an adhesive, insertion coupling, welding, or the like. Accordingly, the second sealing body 371 may prevent or substantially prevent the spacer 340 injected into the chamber 330 from leaking out through the jig hole 360.

In an embodiment, the second sealing body 371 may be formed of an elastically deformable material, such as rubber, silicone, or the like. Accordingly, the second sealing body 371 may be in close contact with the first plate 310 and the second plate 320 by an elastic restoring force thereof, and may expand and contract in the direction parallel to the first direction when the second plate 320 relatively moves with respect to the first plate 310.

In an embodiment, a plurality of second sealing bodies 371 may be provided. The number of second sealing bodies 371 may be the same as the number of jig holes 360. Each of the second sealing bodies 371 may be disposed to individually face a different jig hole 360.

The guide hole 372 may pass through the second sealing body 371 and connect with the jig hole 360. That is, the guide hole 372 may function as a component for guiding the movement of the pressurizing jig inserted into the jig hole 360 inside the second sealing body 371. The guide hole 372 may pass through both, or opposite, ends of the second sealing body 371 in the direction parallel to the first direction. The guide hole 372 may be disposed such that a surface thereof connects with the jig hole 360 and another surface faces the outer surface of the second plate 320. However, a cross-sectional shape of the guide hole 372 may have any of various shapes other than the square illustrated in FIG. 9, such as a circular, oval, or polygonal shape.

An area of the guide hole 372 may be larger than an area of the jig hole 360. Accordingly, the guide hole 372 may be prevented or substantially prevented from interfering with the pressurizing jig inserted into the jig hole 360.

The end plate 300 may further include a reinforcing member 380.

The reinforcing member 380 may be disposed between the first plate 310 and the second plate 320 and coupled to the spacer 340. The reinforcing member 380 may function as a component for reinforcing a mechanical strength of the spacer 340 and a coupling force of the spacer 340 to the first plate 310 or the second plate 320.

In an embodiment, a plurality of reinforcing members 380 may be provided. The plurality of reinforcing members 380 may be formed to have a shape of a rod protruding toward the spacer 340 from at least one of the first plate 310 and the second plate 320. Herein, the reinforcing members 380 will be described as protruding from both the first plate 310 and the second plate 320, by way of example. However, the reinforcing members 380 are not limited thereto, and may protrude only from the first plate 310 or the second plate 320.

FIG. 14 is a view schematically illustrating a configuration of the reinforcing member according to an embodiment of the present disclosure.

Referring to FIG. 14, the reinforcing member 380 may include a first reinforcing rod 381 and a second reinforcing rod 382.

The first reinforcing rod 381 may form an exterior of a side of the reinforcing member 380 and support the second reinforcing rod 382, which will be described below. The first reinforcing rod 381 may be formed to have a shape of a rod extending from the first plate 310 or the second plate 320 toward the chamber 330 in a direction parallel to the first direction. The first reinforcing rod 381 may be inserted into the spacer 340 as the spacer 340 is injected into the chamber 330.

The second reinforcing rod 382 may form an exterior of another side of the reinforcing member 380, and may be connected to the first reinforcing rod 381. The second reinforcing rod 382 may be formed to have a shape of a rod extending from an end of the first reinforcing rod 381 in a direction parallel to the first reinforcing rod. A cross-sectional area of the second reinforcing rod 382 may be larger than a cross-sectional area of the first reinforcing rod 381. Accordingly, the second reinforcing rod 382 may further strengthen a coupling force with the spacer 340 by forming a step structure at a boundary area with the first reinforcing rod 381.

Herein, a manufacturing method of a battery pack according to an embodiment of the present disclosure will be described.

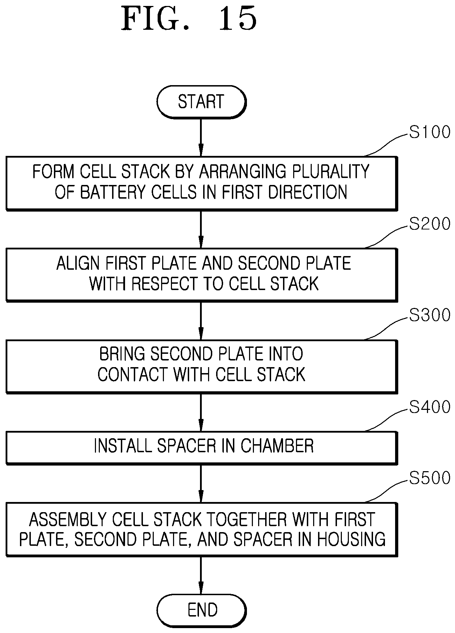

FIG. 15 is a flowchart schematically showing a sequence of a manufacturing method of a battery pack according to an embodiment of the present disclosure.

Referring to FIG. 15, first, a cell stack 200 is formed by arranging a plurality of battery cells 210 in a first direction (S100).

Operation S100 may be performed a number of times corresponding to a number of cell stacks 200 assembled in a housing 100.

Then, an end plate 300, and, in an embodiment, a first plate 310 and a second plate 320 are aligned with respect to the cell stack 200 (S200).

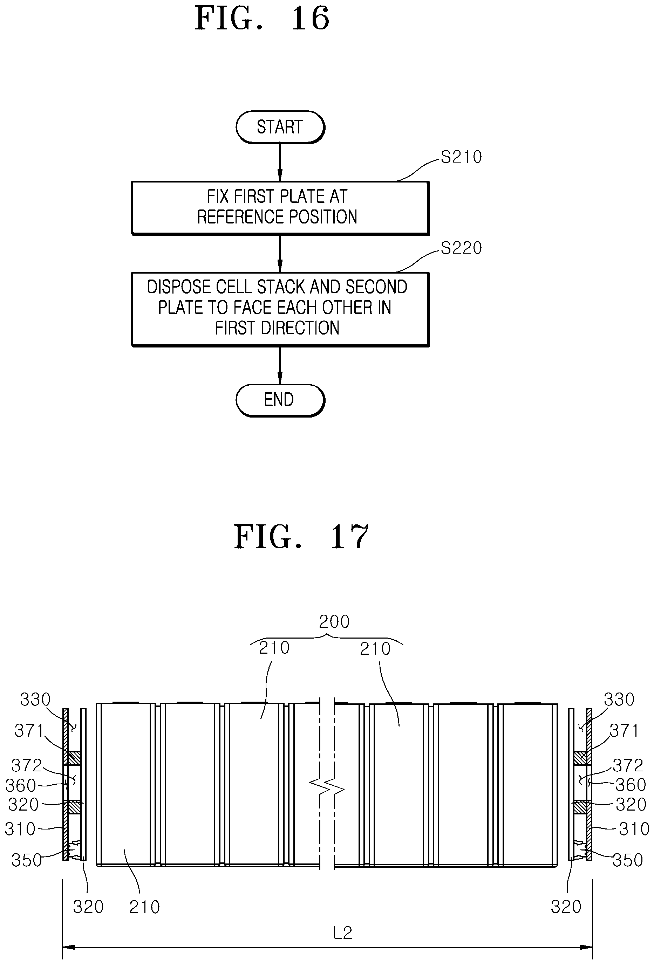

FIG. 16 is a view schematically showing a sequence of an operation S200 according to an embodiment of the present disclosure; and FIG. 17 is a view schematically illustrating a process of operation S200 according to an embodiment of the present disclosure.

Describing operation S200 in further detail with reference to FIGS. 16 and 17, first, the first plate 310 is fixed at a reference position (S210). The reference position of the first plate 310 may refer to a position where a sum of the thickness of the end plate 300 parallel to the first direction and the length of the cell stack 200 is equal to a length L1 of an accommodating space 111 parallel to the first direction.

As an example, in operation S210, each of a pair of end plates 300 may be fixed at a position where a distance L2 between outer surfaces of a pair of first plates 310 is equal to the length L1 of the accommodating space 111 parallel to the first direction, that is, the reference position. In an embodiment, the pair of first plates 310 may be maintained in a fixed state at the reference position by a separate fixing device, such as a fixing jig (not illustrated).

Then, the cell stack 200 and the second plate 320 are disposed to face each other in the first direction (S220).

As an example, in operation S220, the cell stack 200 may be disposed between the pair of end plates 300 spaced apart from each other along the first direction. Inner surfaces of the pair of second plates 320 and the ends of the cell stack 200 may face each other along the first direction and may be spaced apart from each other by a distance (e.g., a predetermined distance) along the first direction.

After operation S200, the second plate 320 is brought into contact with the cell stack 200 (S300).

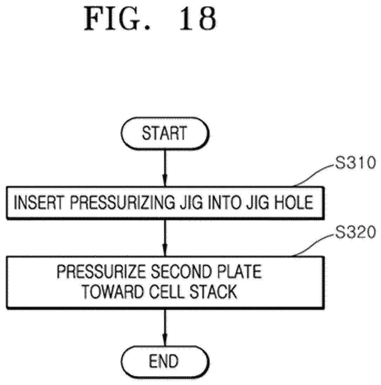

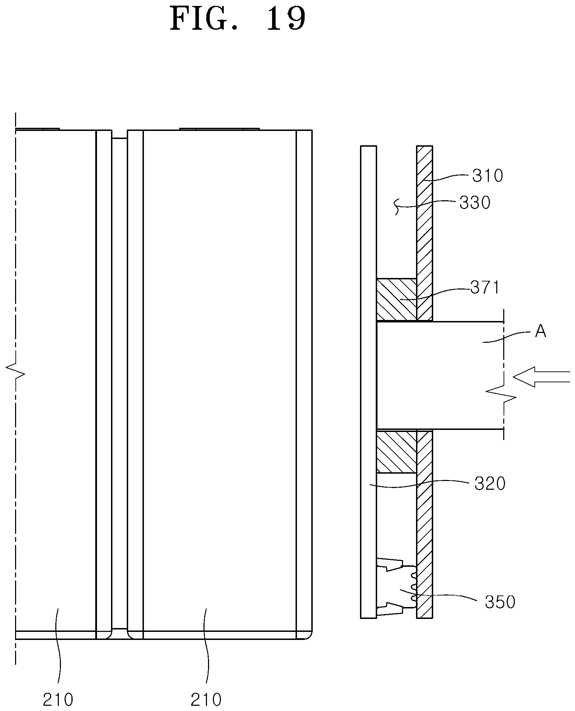

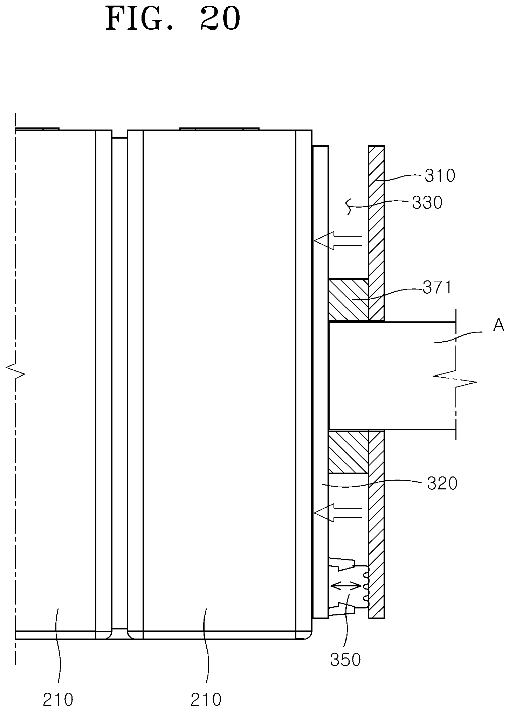

FIG. 18 is a view schematically showing a sequence of operation S300 according to an embodiment of the present disclosure; and FIGS. 19 and 20 are views schematically illustrating a process of operation S300 according to an embodiment of the present disclosure.

Describing operation S300 in further detail with reference to FIGS. 18 to 20, a pressurizing jig "A" is inserted into a jig hole 360 formed in the first plate 310 (S310).

The pressurizing jig "A" may be, for example, any of various types of pressurizing devices having a shape of a rod with a cross-sectional area allowed to be inserted into the jig hole 360, and capable of being moved back and forth in a direction parallel to the first direction by a driving force applied from the outside.

Then, the pressurizing jig "A" is moved to pressurize the second plate 320 toward the cell stack 200 (S320).

In operation S320, the pressurizing jig "A" inserted into the jig hole 360 may be moved toward the second plate 320 while sequentially passing through the jig hole 360 and the guide hole 372, and an end of the pressurizing jig "A" may be brought into contact with an outer surface of the second plate 320.

The pressurizing jig "A" is moved continuously toward the second plate 320 in a state of being in contact with the outer surface of the second plate 320, and the second plate 320 is moved toward the cell stack 200 in the direction parallel to the first direction by a pressurizing force applied from the pressurizing jig "A".

In this case, a first sealing member 350 and a second sealing member 370 may expand and contract in the direction parallel to the first direction while maintaining a state of being in close contact with the first plate 310 and the second plate 320.

As the second plate 320 moves by a distance (e.g., a predetermined distance) or more toward the cell stack 200, an inner surface of the second plate 320 comes into contact with a surface of the end of the cell stack 200.

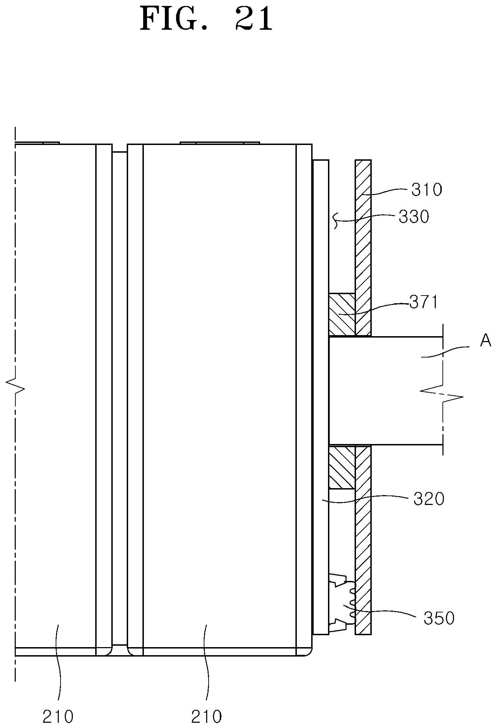

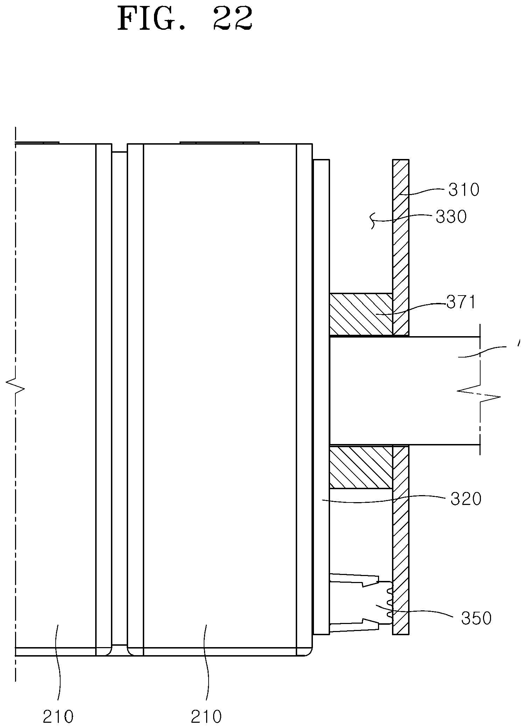

FIGS. 21 and 22 are views illustrating movement states of a second plate according to a length deviation of a cell stack.

Referring to FIG. 21, if a length of the cell stack 200 parallel to the first direction is formed to be greater than that of FIG. 19 due to accumulation of thickness errors of the battery cells 210, the second plate 320 may be moved a relatively short distance compared to FIG. 19 and may come into contact with the cell stack 200. In this case, the thickness of the chamber 330 parallel to the first direction may be formed to be relatively smaller than that of FIG. 19.

Referring to FIG. 22, when the length of the cell stack 200 parallel to the first direction is formed to be smaller than that of FIG. 19 due to accumulation of thickness errors of the battery cells 210, the second plate 320 may be moved a relatively long distance compared to FIG. 19 and may come into contact with the cell stack 200. In this case, the thickness of the chamber 330 parallel to the first direction may be formed to be relatively greater than that of FIG. 19.

After operation S300, a spacer 340 is installed in the chamber 330 disposed between the first plate 310 and the second plate 320 (S400).

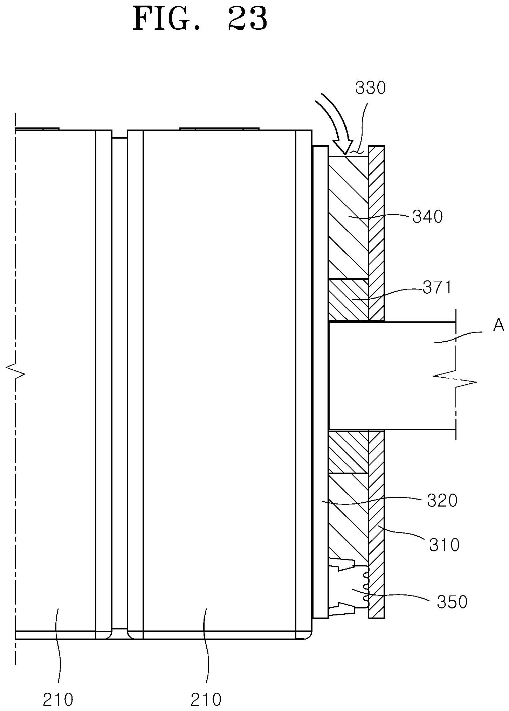

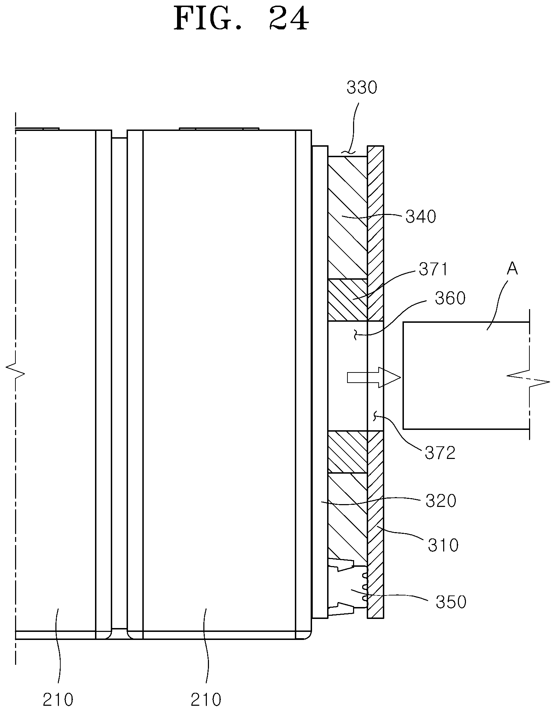

FIGS. 23 and 24 are views schematically illustrating a process of operation S400 according to an embodiment of the present disclosure.

Referring to FIGS. 23 and 24, in operation S400, the spacer 340 may be injected into the chamber 330 in a molten liquid state. Operation S400 may be performed by any of various types of injection devices (not illustrated), such as injectors.

In operation S400, the spacer 340 may be prevented or substantially prevented from leaking out of the chamber 330 by the first sealing member 350 and the second sealing member 370.

In this case, the pressurizing jig "A" may be maintained in a state of being inserted into the jig hole 360.

Then, the spacer 340 may be hardened into a solid state, and both surfaces thereof may be fixed to the first plate 310 and the second plate 320, respectively.

The spacer 340 may restrict movement of the second plate 320 in a direction away from the cell stack 200 by a repulsive force thereof and maintain the second plate 320 and the cell stack 200 in a state of being in contact with each other.

After the spacer 340 is completely hardened, the pressurizing jig "A" is moved in a direction away from the second plate 320 and separated from the jig hole 360.

After operation S400, the cell stack 200 is assembled in the housing 100 together with the end plate 300, that is, the first plate 310, the second plate 320, and the spacer 340 (S500).

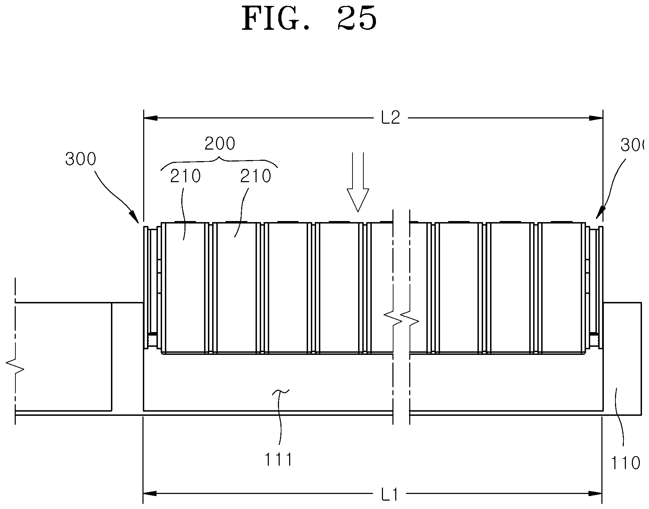

FIG. 25 is a view schematically illustrating a process of operation S500 according to an embodiment of the present disclosure.

In operation S500, the cell stack 200 may be transferred to the upper side of the accommodating space 111 together with the end plate 300. In this case, the second plate 320 of the end plate 300 may be maintained in a state of being in contact with the end of the cell stack 200 by a fixing jig or the like.

Then, the cell stack 200 and the end plate 300 may be inserted into the accommodating space 111.

In an embodiment, a sum of the thickness of the end plate 300 parallel to the first direction and the length of the second plate 320 is equal to the length L1 of the accommodating space 111 parallel to the first direction, and the outer surface of the first plate 310 may be in contact with the housing 100, and, in an embodiment, the inner wall surface of the housing body 110, and the cell stack 200 may be firmly supported inside the accommodating space 111.

In an embodiment, operation S500 may be repeatedly performed on the plurality of cell stacks 200.

According to one or more embodiments of the present disclosure, a cell stack is directly assembled inside a housing without separate structures, such as an existing side plate, thereby improving the overall energy density.

According to one or more embodiments of the present disclosure, during a process of manufacturing a battery pack, since an end plate is adjusted in thickness according to a length of the cell stack and absorbs a length error of the cell stack, it is possible to prevent or substantially prevent a phenomenon in which the cell stack is not smoothly or easily inserted into an accommodating space or the cell stack is not firmly fixed inside the accommodating space.

According to one or more embodiments of the present disclosure, a sum of a length of each cell stack and a thickness of an end plate installed inside different accommodating spaces is maintained the same, and, thereby, it is possible to prevent or substantially prevent pressure deviation between cell stacks and improve a lifespan of a battery pack.

However, aspects and effects obtainable through the present disclosure are not limited to the above aspects and effects, and other technical aspects and effects that are not mentioned will be clearly understood by those skilled in the art from the following description of the present disclosure.

While the present disclosure has been described with reference to some embodiments shown in the drawings, these embodiments are merely illustrative and it is to be understood that various modifications and equivalent other embodiments can be derived by those skilled in the art on the basis of the embodiments.

Therefore, the technical scope of the present disclosure should be defined by the appended claims.

## Claims

1. A battery pack comprising:
a housing (100);
a cell stack (200) inside the housing (100) and comprising a plurality of battery cells (210) arranged along a first direction; and
an end plate (300) between the housing (100) and the cell stack (200),
wherein the end plate (300) comprises:
a first plate (310) configured to contact the housing (100);
a second plate (320) arranged to face the first plate (310) and configured to contact or separate from the cell stack (200) while being moved in a direction parallel to the first direction;
a chamber (330) between the first plate (310) and the second plate (320); and
a spacer (340) located inside the chamber (330) such that the second plate (320) contacts the cell stack (200).

2. The battery pack as claimed in claim 1, wherein the spacer (340) is elastically deformable.

3. The battery pack as claimed in one of claims 1 or 2, wherein the end plate (300) further comprises a first sealing member (350) between the first plate (310) and the second plate (320) and configured to seal the chamber (330).

4. The battery pack as claimed in claim 3, wherein the first sealing member (350) comprises:
a first sealing body (351) arranged to at least partially surround the chamber (330) and comprising ends in direct contact with the first plate (310) and the second plate (320), respectively; and
a support member (352) fixed to at least one of the first plate (310) and the second plate (320) and configured to support the first sealing body (351).

5. The battery pack as claimed in claim 4, wherein the first sealing body (351) is elastically deformable.

6. The battery pack as claimed in one of claims 4 or 5, wherein the first sealing member (350) further comprises a plurality of sealing ribs (353) protruding from an end of the first sealing body (351).

7. The battery pack as claimed in at least one of claims 3 to 6, wherein the end plate (300) further comprises:
a jig hole (360) extending through the first plate (310); and
a second sealing member (370) spaced apart from the first sealing member (350) and configured to seal the jig hole (360).

8. The battery pack as claimed in claim 7, wherein the second sealing member (370) comprises:
a second sealing body (371) arranged to face the jig hole (360) and comprising ends in direct contact with the first plate (310) and the second plate (320), respectively; and
a guide hole (372) passing through the second sealing body (371) and configured to connect with the jig hole (360), and. wherein preferably an area of the guide hole (372) is larger than an area of the jig hole (360).

9. The battery pack as claimed in at least one of the preceding claims, further comprising at least one reinforcing member (380) between the first plate (310) and the second plate (320) and coupled to the spacer (340), and
preferably, the at least one reinforcing member (380) protrudes toward the spacer (340) from at least one of the first plate (310) and the second plate (320).

10. The battery pack as claimed in claim 9, wherein the at least one reinforcing member (380) comprises:
a first reinforcing rod (381); and
a second reinforcing rod (382) connected to the first reinforcing rod (381), and
a cross-sectional area of the second reinforcing rod (382) is larger than a cross-sectional area of the first reinforcing rod (381).

11. A manufacturing method of a battery pack, the method comprising:
forming a cell stack (200) by arranging a plurality of battery cells (210) in a first direction;
aligning a first plate (310) and a second plate (320) with respect to the cell stack (200);
bringing the second plate (320) into contact with the cell stack (200);
installing a spacer (340) in a chamber (330) between the first plate (310) and the second plate (320); and
assembling the cell stack (200) together with the first plate (310), the second plate (320), and the spacer (340) in a housing (100).

12. The manufacturing method as claimed in claim 11, wherein the aligning the first plate (310) and the second plate (320) with respect to the cell stack (200) comprises:
fixing the first plate (310) at a reference position; and
arranging the cell stack (200) and the second plate (320) to face each other in the first direction.

13. The manufacturing method as claimed in one of claims 11 or 12, wherein the bringing the second plate (320) into contact with the cell stack (200) comprises:
inserting a pressurizing jig into a jig hole (360) formed in the first plate (310); and
moving the pressurizing jig and pressurizing the second plate (320) toward the cell stack (200).

14. The manufacturing method as claimed in at least one of claims 11 to 13, wherein, in the installing the spacer (340) between the first plate (310) and the second plate (320), the spacer (340) is hardened after being injected in a liquid state between the first plate(310) and the second plate (320).

15. The manufacturing method as claimed in at least one of claims 11 to 14, wherein, in the assembling the cell stack (200) together with the first plate (310), the second plate (320), and the spacer (340) in the housing (100), the first plate (310) is in contact with the housing (100).
